# EUROPEAN PATENT APPLICATION

(11) **EP 1 629 922 A1**
(43) Date of publication of application: **01.03.2006**
(21) Application number: 04255160.6
(22) Date of filing: 26.08.2004
(51) Int. Cl.: B23H 9/00, F02M 61/16, B23H 9/10

(54) **Apparatus for, and method of, machining an injection nozzle sac**

(71) Applicant: Delphi Technologies, Inc., Troy, MI 48007 (US)
(72) Inventor: Pilaski, Milan, Deggendorf 94469 (DE); Diver, Carl, Deggendorf 94469 (DE); Jackman, Kim, Colchester CO4 9BD (GB)
(74) Representative: Hopley, Joanne Selina

(57) **Abstract**

An apparatus (42) for machining a sac (34) in an injection nozzle having a body (10) provided with a blind bore (11) comprises: an electrode/guide assembly comprising a vibratable electrode (66) having a shaped tip (98) and a guide (70) for the electrode which is shaped to define the flow of electrolyte to, and from, the electrode tip (98), means (64) for vibrating the electrode (66) and moving the electrode tip (98), in use, towards the blind end of the bore (11), and means for applying a pulsed current to the electrode (66) to effect a precision electrochemical machining process to machine the sac in a substantially complementary shape to that of the electrode tip (98). The method comprises: applying a pulsed current to the electrode (66), vibrating the electrode (66) longitudinally within the guide (70) such that the size of the gap is periodically varied between a minimum length, *lmin*, and a maximum length, *lmax*, and periodically causing electrolyte to flow between the electrode tip (98) and the blind end of the bore (11) when the length of the gap is *lmin*, and moving the electrode tip (98) towards the blind end of the bore (11) during machining of the sac (34).

## Description

### Technical Field

The present invention relates to an apparatus for, and method of, machining an injection nozzle sac. It relates particularly, although not exclusively, to the machining of an injection nozzle sac for a diesel engine injection nozzle.

### Background Art

Known fuel injectors include an injection nozzle having an injection nozzle body which is provided with a blind bore. A valve needle is slidable within the bore, and an internal surface thereof defines a seating for the valve needle. The valve needle is engageable with the seating to control fuel delivery between an injection nozzle chamber (known as a "sac") and one or more injection nozzle outlet openings to an associated engine cylinder. In one type of injector, a surface of the valve needle is exposed to fuel pressure within a control chamber. By controlling fuel pressure within the control chamber, valve needle movement towards and away from the valve needle seat is controlled. When the valve needle is seated against the seating fuel injection is prevented, and when the valve needle is lifted away from the seating fuel injection occurs.

The sac is situated at the blind end of the injection nozzle body bore, and is typically conical in shape. In fuel injection nozzles with this type of sac, a small amount of fuel may be trapped in the sac following a fuel injection event. When this trapped fuel evaporates, the hydrocarbon emissions of the engine increase. For this reason the sac is made as small as possible, preferably of the order of 0.5 mm in diameter at its widest part.

Injection nozzle sacs are usually machined by drilling using a specially manufactured drill, followed by heat treatment of the machined injection nozzle in a carbon-rich atmosphere in order to harden the inner surface of the bore so as to provide a hard wearing seating. However, there are a number of disadvantages of using this conventional drilling process.

One disadvantage is that the drilling operation causes a large amount of tool wear which results in the drill bit having to be changed after every 500 machined nozzles. During its short lifetime, the drill bit also suffers from wear which affects the geometry of the machined sac.

Another disadvantage of the conventional drilling process is that the inner surface of the machined sac is irregular and rougher than desired. The roughness of the inner surface of the sac influences the flow characteristics of the injection nozzle, with a smooth sac producing a more efficient fuel flow and less emissions. It is also beneficial to provide a smooth inner surface free of stress and micro-cracks as this hinders the formation of larger cracks, and thus improves the pressure stability of the sac.

It is an object of the present invention to provide an improved apparatus, and method, for machining an injection nozzle sac which substantially overcomes the above mentioned problems.

### Summary of the Invention

According to a first aspect of the present invention there is provided an apparatus for machining a sac in an injection nozzle having an injection nozzle body provided with a blind bore, the apparatus comprising: an electrode/guide assembly comprising a vibratable electrode having a shaped tip and a guide for the electrode, the guide being shaped to define the flow of electrolyte to, and from, the electrode tip, vibrating means for vibrating and moving the electrode, in use, towards the blind end of the blind bore, and means for applying a pulsed current to the electrode to effect a precision electrochemical machining process to machine the sac in a substantially complementary shape to that of the electrode tip.

The machining of the injection nozzle sac using the apparatus of the present invention produces a sac which has a smooth inner surface compared to that produced using conventional drilling, leading to more efficient fuel flow within the injection nozzle and less unwanted emissions. The pressure stability of the sac is also increased, as stress-cracks and micro-cracks are less likely to appear during use of the injection nozzle. Additionally, the electrode used in the apparatus of the present invention does not suffer from wear, and there is thus only minor variation in the dimensions of the machined sacs. This has very important consequences for control of fuel injection as shot-to-shot variations are reduced and hydraulic consistency is improved.

Preferably, the electrode extends through a through bore formed in the guide, and the electrode/guide assembly is accommodated, in use, within the blind bore formed in the injection nozzle body.

An end of the guide engages, in use, with a seating formed in the blind end of the bore. In this manner, the guide is firmly held in place in the apparatus during the machining process.

Preferably, the electrode tip is spaced from the blind end of the bore so as to form a gap through which electrolyte flows, in use.

Preferably the guide defines, with an internal surface of the blind bore, at least one first (outer) fluid passageway for the flow of electrolyte, and the electrode defines, with an internal surface of the through bore, at least one second (inner) fluid passageway for the flow of electrolyte.

The guide is preferably elongate in shape and may comprise at least one longitudinal groove formed in an outer surface thereof so as to define the respective at least one first fluid passageway. Most preferably, the electrode comprises an elongate member of substantially cylindrical cross-section having at least one substantially longitudinal flat formed on its outer surface so as to define the respective at least one second fluid passageway. Electrolyte is conveniently caused to flow, in use, to the electrode tip via the at least one second fluid passageway, through the gap between the electrode tip and the blind end of the bore, and away from the electrode tip via the at least one first fluid passageway.

One advantage of forming the fluid passageways in this way is that apparatus components in addition to those required for the electrochemical machining process do not have to be provided, resulting in a simple, and thus relatively inexpensive, apparatus. Another advantage is that electrolyte may be carried out of the injection nozzle during the machining process via an annular gallery and a drilling which are used to supply fuel to the injection nozzle in use, so that one or more additional fluid passageway for the flow of electrolyte do not have to be machined in the injection nozzle body. The integrity of the injection nozzle is thus not adversely affected, and only the apparatus components themselves need to be modified to provide the fluid passageways.

Preferably the blind bore and at least a portion of the guide are substantially circular in cross-section, and the diameter, *D1*, of the guide is approximately 200 µm less than the diameter, *D2*, of the blind bore so as to facilitate the flow of electrolyte, in use, towards or away from the electrode tip. Most preferably the diameter, *D1*, of the guide is approximately 100 µm less than the diameter, *D2*, of the blind bore.

Preferably, the guide comprises an electrically non-conductive material such as, for example, zirconium dioxide, a semi-crystalline thermoplastic, or enamel-coated steel.

According to a second aspect of the present invention there is provided a method for machining a sac in an injection nozzle having an injection nozzle body with a blind bore using the apparatus given above, the method comprising: applying a pulsed current to the electrode, vibrating the electrode longitudinally within the guide such that the size of the gap is periodically varied between a minimum length, *lmin*, and a maximum length, *lmax*, and periodically causing electrolyte to flow between the electrode tip and the blind end of the bore when the length of the gap is *lmin*, and moving the electrode tip in the direction of the blind end of the bore during the machining of the sac.

Typically, the electrode is vibrated with a frequency of approximately 50 Hz and an amplitude of approximately 400 µm.

Most preferably, the pulsed current is applied to the electrode for between approximately one and five milliseconds when the size of the gap is *lmin*.

According to a third aspect of the present invention there is provided an injection nozzle comprising a sac machined using the apparatus and/or method as described above.

### Brief Description of Drawings

Preferred embodiments of the present invention will be described, by way example only, with reference to the accompanying drawings, in which:-
Figure 1 is cross-sectional view of a known fuel injector having an injection nozzle sac which may be machined according to the present invention;
Figure 2 illustrates an embodiment of the apparatus for performing precision electrochemical machining (PEM) of the injection nozzle sac shown in Figure 1.
Figure 3a is a sectional view of the apparatus shown in Figure 2, taken along the line X-X';
Figure 3b is another sectional view of the apparatus shown in Figure 2, taken along the line Z-Z';
Figure 4a illustrates a section of the lower part of the injection nozzle mounted in the apparatus of Figures 2, 3a and 3b;
Figure 4b illustrates the electrode positions of the apparatus of Figures 2, 3a and 3b during PEM machining of the sac;
Figure 5 is a sectional view of the injection nozzle shown in Figure 4a, taken along the line Y-Y';
Figure 6 illustrates the flow of electrolyte in the injection nozzle during PEM machining of the sac using the apparatus of Figures 2 to 5;
Figures 7a and 7b are scanning electron microscope (SEM) images of a conventionally machined sac, and a sac machined according to the present invention, respectively;
Figure 8a is a sectional view of the tip of an electrode using in the apparatus of Figures 2 to 5; and
Figure 8b is a sectional view of a sac machined using the electrode shown in Figure 8a.

### Detailed Description of the Preferred Embodiments

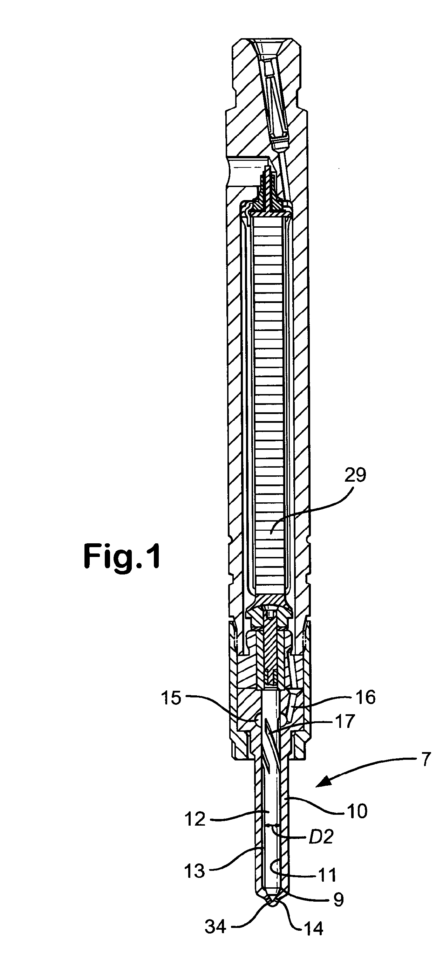

Referring to Figure 1, there is shown a known fuel injector 8 of the piezoelectric type. The components of the fuel injector 8 will firstly be described, followed by apparatus for, and a method of, machining a sac of the injection nozzle of such a fuel injector.

The fuel injector 8 illustrated in Figure 1 comprises an injection nozzle 7 having a nozzle body 10 provided with a blind bore 11 of diameter D2 within which a valve needle 12 is movable. The valve needle 12 is shaped for engagement with a seating 9 defined adjacent the blind end of the bore 11. The valve needle 12 is of stepped form, including a relatively large region which is of diameter substantially equal to that of the adjacent part of the bore 11 and arranged to guide the valve needle 12 for sliding movement within the bore 11, and a reduced diameter portion which defines, with the bore 11, a delivery chamber 13 for receiving fuel through an injector inlet.

The bore 11 is shaped to define an annular gallery 15 which communicates with a drilling 16 provided in the nozzle body 10. The valve needle 12 is provided with flutes 17 defining flow paths between the annular gallery 15 and the delivery chamber 13. The valve needle 12 defines an angled step at the interconnection of the relatively large and smaller diameter regions thereof, the step forming a thrust surface which is exposed to the fuel pressure within the delivery chamber 13 such that, in certain circumstances, and when fuel under high pressure is applied to the delivery chamber 13, the action of the fuel applies a force to the valve needle 12 urging the needle away from its seating 9. The exposed end surface of the valve needle 12 similarly forms a thrust surface against which fuel under pressure may act to urge the needle 12 towards its seating 9.

The blind end of the bore 11 terminates in a chamfered tip which extends into a sac or chamber 34 defined at the blind end of the nozzle body bore 11. The fuel outlet openings 14 provide a flow path for fuel into the combustion chamber (not shown) from the sac 34.

A piezoelectric actuator, referred to generally as 29, is arranged to control movement of the valve needle towards and away from the seating 9, in use, and thus controls communication between the delivery chamber 13 and the outlets 14. Details of the operation of the fuel injector 8 can be found in the Applicant's granted European patent no. EP 0 995 901, and so will not be discussed any further.

An embodiment of the apparatus of the present invention for machining the injection nozzle sac 34 of a fuel injector 8 of the type shown in Figure 1 will now be described.

The present invention utilises precision electrochemical machining (PEM) to machine the injection nozzle sac 34. In general, an electrochemical anodic dissolution process is utilised wherein a pulsed current is passed between a workpiece (i.e. a nozzle body 10 having a pre-drilled blind bore 11) and an electrode with a shaped tip. The workpiece is held at a positive potential with respect to the electrode, and hence acts as an anode. The electrode, being held at a negative potential with respect to the workpiece, acts as a cathode. During the PEM process, the electrode and the workpiece are separated by a gap, the size of which varies as the electrode vibrates. Electrolyte is passed through the gap between the electrode and the workpiece to effect the dissolution process at the surface of the workpiece, and to carry away unwanted dissolution products and heat. In this manner, the shape of the electrode tip is "copied" into the workpiece.

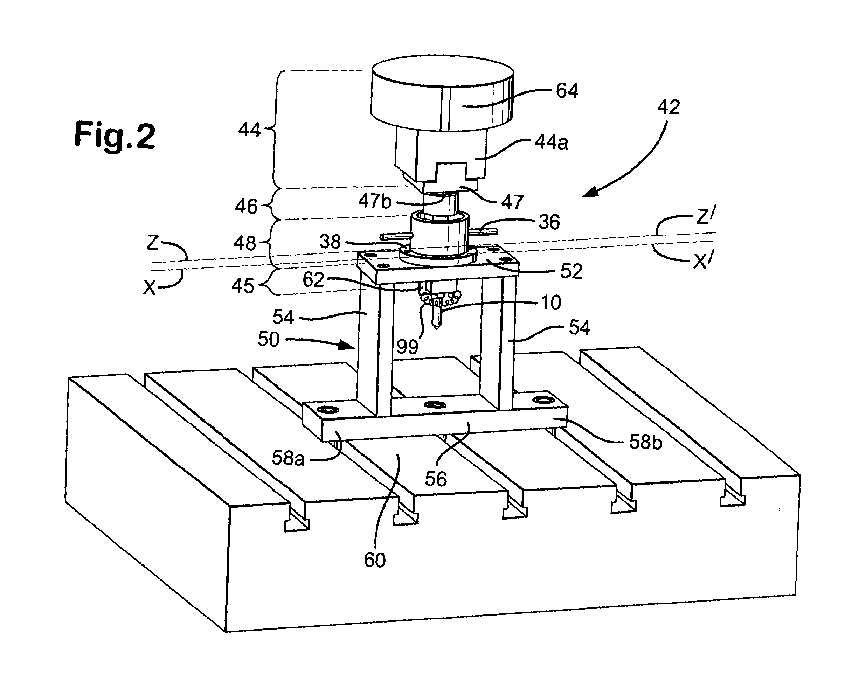

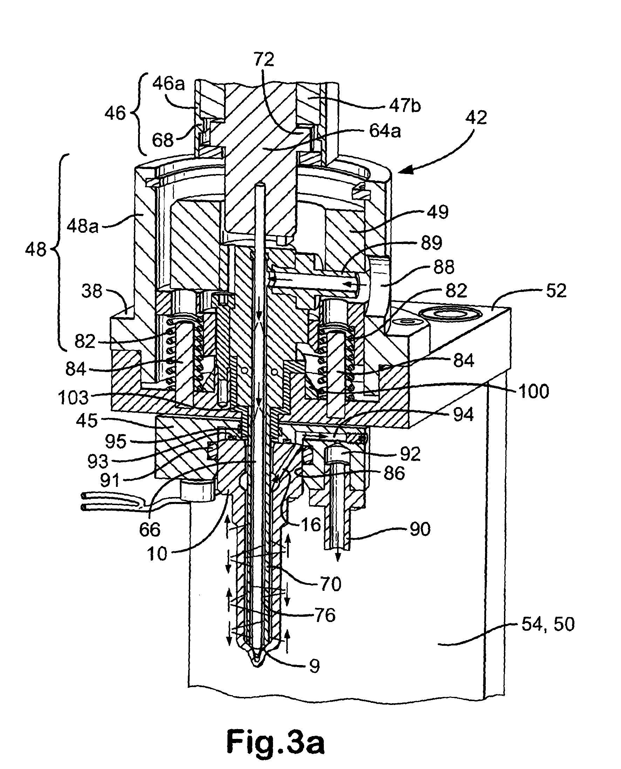

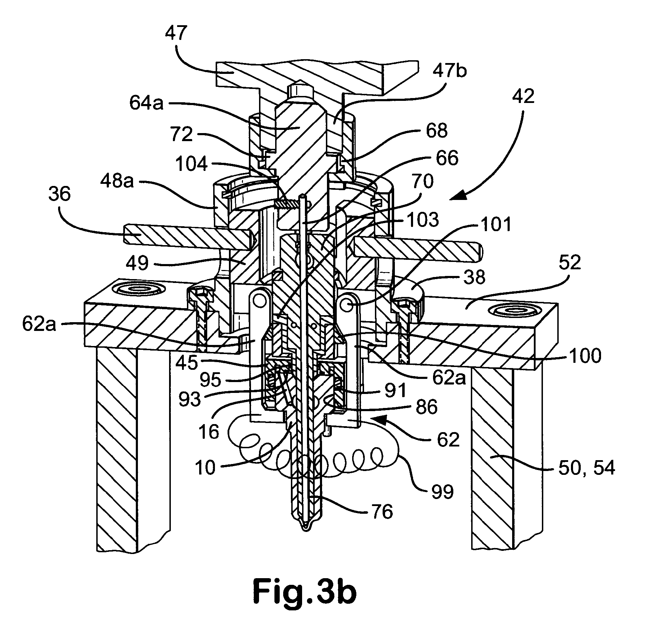

Referring to Figures 2, 3a and 3b, the apparatus 42 comprises four main sections: a head section 44 which is coupled to a generally cylindrical body section 48 via a neck section 46, and a base section 45.

The head section 44 of the apparatus 42 comprises a cylindrical vibrating head 64 which can be moved in a vertical direction for positioning of an electrode 66 (see Figure 3a) and electrode feed during machining. The vibrating head 64 is also arranged to impart a vibrational movement to the electrode 66 at a specified frequency and amplitude (approximately 50 Hz and 400 µm).

Below the vibrating head 64 there is provided an upper head member 44a which is coupled to a lower head member, referred to generally as 47. The lower head member 47 comprises a generally circular cylindrical lower part 47b. The lower head member 47 is a simplified representation of the common EROWA clamping system and is used to hold an electrode clamp 64a (see Figures 3a and 3b). The lower part 47b has an external thread formed on its outer surface, and an axial blind bore formed therein which has a generally conical blind end.

Referring in particular to Figure 3a, the neck section 46 of the apparatus 42 comprises a neck housing 46a which is in the form of an inverted circular cylindrical cap having a thread (not shown) formed on its internal surface for engaging with the external thread of the lower part 47b of the lower head member 47. Also formed on the internal surface of the neck housing 46a is an inwardly projecting circumferential rib 68 which provides a lower seating for the lower part 47b of the lower head member 47.

Referring to Figure 3b in particular, the electrode clamp 64a is of generally cylindrical construction having an upper portion, a central flange 72, and a lower portion. The upper portion of the electrode clamp 64a is situated in the axial blind bore provided in the lower part 47b of the lower head member 47. The top of the electrode clamp 64a is frusto-conical in shape, so as to aid the orientation and positioning of the electrode clamp 64a within the complementary-shaped end of the bore in the lower head member 47. The flange 72 of the electrode clamp 64a extends into a substantially annular recess (not identified) formed by the lower face of the lower head member part 47b, and the inner side walls and the base of the neck housing 46a. The height of the annular recess is slightly larger than the height of the flange 72 so as to restrict vertical movement of the electrode clamp 64a during vibration of the vibrating head 64.

The lower portion of the electrode clamp 64a is situated in the upper part of the body section 48 of the apparatus 42, and has a bore defined therein for receiving an upper portion of the vibratable electrode 66. The electrode 66 is fixed to the electrode clamp 64a by a grub screw 104. By virtue of the electrode clamp 64a being coupled, via the upper and lower head members 44a and 47, to the vibrating head 64, it is driven by the vibrating head 64 such that the electrode 66 is vibrated at the desired frequency.

The body section 48 of the apparatus 42 comprises a body housing 48a of tubular form in which there is disposed, coaxially, a vertically moveable inner body member 49, also of tubular form. The middle part of the body section 48 further includes a flow inlet 88 for permitting the inflow of electrolyte, and a pair of handles 36. The lower end of the body section 48 comprises a flange 38 which sits on a planar upper section 52 of a generally rectangular support 50. Depending perpendicular first and second support legs 54 connect the upper support section 52 to a planar support base 56. Portions of the support base 56 extend past the first and second legs 54 to provide respective first and second stabilising feet 58a and 58b. The support base 56 sits on a machine table 60.

The base section 45 of the apparatus 42 is situated underneath the upper section 52 of the support 50. The base section 45 comprises a tubular body which defines an axial bore 86. The axial bore 86 is positioned directly below an aperture formed in the upper planar surface 52 of the support 50, which in turn is positioned directly below the aperture formed by the tubular inner body member 49.

Disposed within the inner body member 49 is the upper portion of an elongate generally elongate guide 70 of cylindrical form, and having a circular cross-section, the upper face of the guide 70 being positioned directly below the lower face of the electrode clamp 64a. The upper portion of the guide 70 is of relatively large diameter. The middle portion of the guide 70 is of smaller diameter and is situated in the aperture formed in the upper surface 52 of the support 50. The lower elongated portion of the guide 70 is of relatively small diameter *D1* and extends through the axial bore 86 provided in the base section 45 of the apparatus 42 and projects downwardly therefrom.

The guide 70 has a through bore 76 formed therein which extends along its full length. The through bore 76 receives substantially the entire length of the electrode 66 so that the guide 70 and the electrode 66 form a guide/electrode assembly 66,70 with the top part of the electrode 66 projecting from the guide 70 into the blind bore formed in the lower part of the electrode clamp 64a. The through bore 76 is dimensioned to form a close sliding fit with the electrode 66. The nozzle body 10 is fitted onto the part of the guide/electrode assembly 66,70 that projects downwardly from the base section 45 such that the lower portion of the guide/electrode assembly 66,70 is arranged within the bore 11 formed in the nozzle body 10.

The bore 86 formed in the base section 45 is arranged to accommodate the upper portion of the nozzle body 10 in a lower part of the bore 86 which is of larger diameter than its upper part. The base section 45 also includes a flow outlet 90 formed in the lower face thereof to permit the outflow of electrolyte. A set of sealing rings is also provided in respective recesses formed in the base section 45 to prevent the leakage of electrolyte. The first sealing ring 91 is located adjacent the upper portion of the nozzle body 10, the second sealing ring 93 is located adjacent the upper face of the nozzle body 10, and the third sealing ring 95 is located adjacent the upper part of the bore 86.

A stepped insulating spacer 103 of complementary shape to the middle portion of the guide 70 (and adjacent parts of the upper and lower portions) is disposed between the guide 70 and the upper section 52 of the support 50. Below the insulating spacer 103 there are formed outwardly flared projections 100, the purpose of which is described below.

A computerised control system is also provided (not shown) which is connected to the electrode 66, a power source, the vibrating head 64, an electrolyte pump, and an electrolyte tank. The computerised control system may also control various sensors for sensing, for example, anodic current, electrolyte pressure, electrolyte temperature, electrolyte pH value, and electrolyte conductivity.

Referring in particular to Figure 3a, two spring chambers containing helical compression springs 82 are formed in the lower part of the inner body member 49. Two guiding bolts 84 are also provided, the upper portions of the bolts 84 being positioned inside the springs 82, and the lower portions of the bolts 84 being situated in recesses formed in the upper section 52 of the support 50. The handles 36 are attached to the inner body member 49 and extend through the body housing 48a via relatively large oval apertures formed therein.

Looking at Figure 3b, the apparatus 42 further includes a clamping arrangement 62 which holds the nozzle body 10 in place over the guide/electrode assembly 66,70. The clamping arrangement 62 includes first and second clamp members 62a in the form of arms, each of which is pivotally mounted to the inner body member 49 via a connecting bolt 101. When the nozzle body 10 is fixed in place, the clamp arms 62a extend downwardly past the base section 45. At the end of each clamp arm 62a there is provided a clamp hand (not identified). When the nozzle body 10 is fixed in place, each of the clamp hands extends inwardly and engages with the nozzle body 10 immediately below its relatively large diameter upper region.

The clamp arms 62a are urged into engagement with the nozzle body 10 by means of a clamping spring 99, and also by the compression springs 82, such that the nozzle body 10 is correctly positioned over the guide/electrode assembly 66,70.

When the handles 36 are pushed down, the force of the compression springs 82 is overcome, causing the clamp arms 62a to be moved in an outward direction by the outwardly flared projections 100 such that the nozzle body 10 can be removed from the apparatus 42.

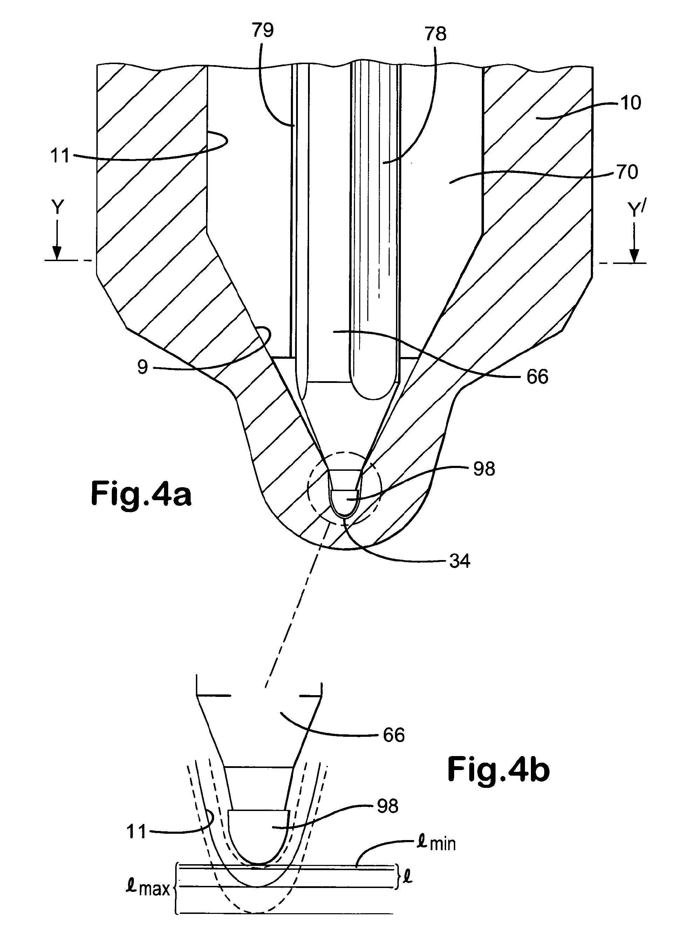

Referring now to Figure 4a, there is shown the lowermost part of the guide/electrode assembly 66,70 arranged within the bore 11 when the nozzle body 10 is fixed in position in the apparatus 42. It can be seen from this figure that the blind end of the bore 11 is of tapered form so as to form the conical seating 9. It can also be seen that the end of the guide 70 is of frusto-conical form such that it engages with the seating 9, but does not extend fully into the very tip of the blind bore 11.

The end of the electrode 66 protrudes from the through bore 76 formed in guide 70 and tapers to a tip 98 of substantially conical form. In use, the tip 98 is positioned near the blind end of the bore 11 so as to leave a gap therebetween. As stated previously, the tip 98 of the electrode is shaped so as to produce the sac 34 during the PEM process.

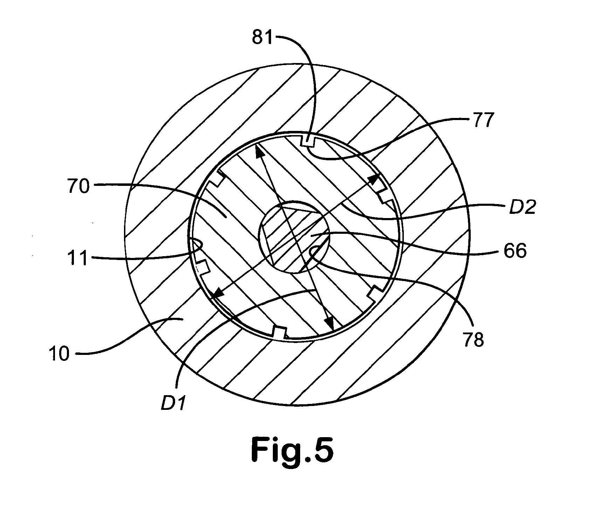

The electrode 66 comprises an elongate rod of copper tungsten alloy which is 78 mm in length and has a base diameter of 1.5 mm. The rod has a plurality of longitudinal flat surfaces 78 formed thereon so as to define inner fluid passageways 79 between the flat surfaces 78 and the inner walls of the guide 70 (although it is possible to use a single flat 78 to define a single inner fluid passageway 79). These flat surfaces 78 can be seen more clearly in the cross-sectional view of Figure 5.

Figure 5 also illustrates that the outer walls of the lower elongated portion of the guide 70 have a plurality of longitudinal grooves 77 formed therein which define outer fluid passageways 81 (although it is possible to form only a single groove 77 in the outer wall of the guide 70 to define only a single outer fluid passageway 81). The guide 70 is further dimensioned such that a gap of 200 µm exists between the outer walls of the guide and the walls of the bore 11 to facilitate flow of electrolyte. The guide 70 comprises an electrical non-conductive and wear resistant material, such as zirconium dioxide, a semi-crystalline thermoplastic (such as TK-PEEK), or enamel coated steel.

As stated previously, the body section 48 of the apparatus 42 is provided with a flow inlet 88. The flow inlet 88 is arranged to be coupled to an electrolyte tank (not shown). The flow inlet 88 leads to a radial hose connector 89 which extends through the body housing 48a, the inner body member 49, and the upper portion of the guide 70 so that electrolyte is permitted to flow to the inner fluid passageways 79. The flow outlet 90 provided in the lower face of the base section 45 permits the flow of used electrolyte away from the guide 70 and out of the apparatus 42. The flow outlet 90 communicates with one end of an outlet passageway which is defined in the base section 45, the other end of which communicates with the drilling 16 provided in the nozzle body 10. The outlet passageway is defined by various drillings through the base section 45, including a radial drilling 94 and an axial drilling 92 which communicates with the outlet 90.

To mount the injection nozzle 10 in the apparatus 42, the body section 48 is raised from the upper section 52 of the fixture 50. The guide 70 is then inserted into the aperture formed in the upper section 52 of the fixture 50. While the body section is in its raised position, the top of the electrode 66 is inserted into the blind bore formed in the lower portion of the electrode clamp 64a. The grub screw 104 is then tightened to hold the electrode 66 securely in position. The electrode 66 is then inserted into the through bore 76 formed in the guide 70 by lowering the body section 48. The clamp handles 36 are then pressed and held down to outwardly open the clamp arms 62. The nozzle body 10 is then slid over the electrode/guide assembly 66,70 and advanced until the frusto-conical end of the guide 70 engages with the seating 9 formed in the nozzle body 10, so that the relatively large diameter upper region of the nozzle body 10 is received in the lower part of the bore 86 in the base section 45. The clamp handles 36 are then released so that the clamp arms 62 engage with the nozzle body 10 and hold it securely in place.

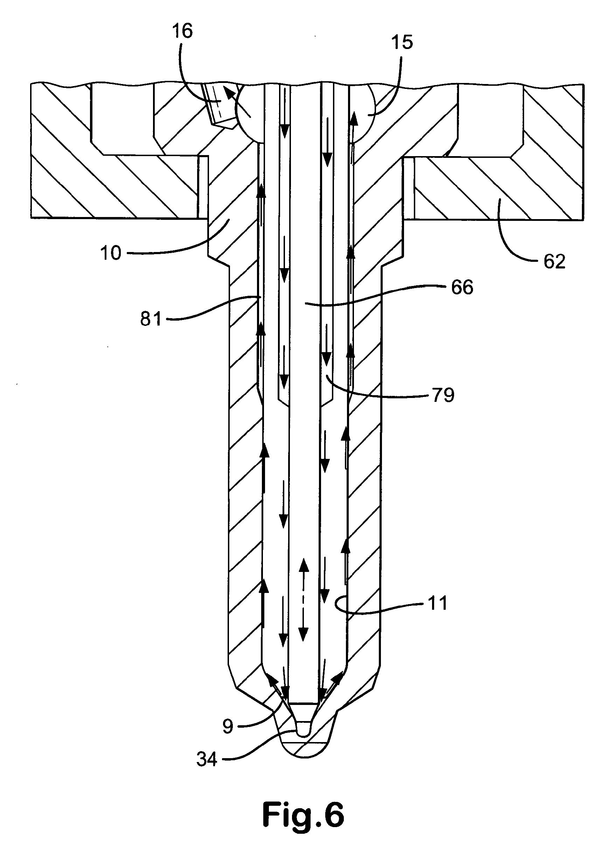

The machining of the sac 34 will now be described with reference to Figure 6, in particular. When the nozzle body 10 has been securely fitted to the guide/electrode assembly 66,70 and the apparatus 42 by means of the clamping arrangement 62, the power supply is switched on. This causes the electrode 66 to be vibrated within the guide 70 and a pulsed current to be applied to the electrode 66. During this vibrational phase, the electrode 66 is vibrated vertically within the guide 70, and thus the length, *l*, of the gap between the electrode tip 98 and the blind end of the bore 11 varies between a maximum value, *lmax*, and a minimum value, *lmin*, according to the vertical position of the electrode 66 (as shown in Figure 4b). The pulsed current is synchronised with the position of the electrode 66 such that the current is switched on for 1 to 5 milliseconds when the size of the gap is *lmin*. The small size of the gap compared to standard electrochemical machining allows a high feature resolution of 10 to 50 µm and high machining accuracy.

Electrolyte is then pumped, via the flow inlet 88, along the hose connector 89 and into the inner fluid passageways 79. The electrolyte flows down the inner fluid passageways 79 towards the tip of the electrode 66. As the PEM process takes place, dissolution products are formed at the electrode tip 98 where the sac 34 is being machined. When the gap between the electrode tip 98 and the blind end of the bore 11 is at its largest value of *lmax*, and the current applied to the electrode 66 is switched off, electrolyte is caused to flow through the gap so as to remove the dissolution products from the region of the electrode tip 98. Thus, electrolyte is caused to flow through this gap only periodically. The "used" electrolyte exits the gap and flows upwards via the outer fluid passageways 81, as illustrated by the arrows of Figure 6, exiting the guide 70 via the drilling 16. The used electrolyte then flows to the flow outlet 90 via the outlet fluid passageway 81, and exits the apparatus 42. The used electrolyte can be cleaned and reused in the PEM process.

As mentioned earlier, the vibration of the electrode 66 is combined with a vertical (or "z-axis") feed such that the electrode 66 is moved downwards within the bore 11 at a feed rate of 0.1 to 0.2 mm/min. An optical linear encoder, which is part of the apparatus 42, measures the position of the electrode 66 within the bore 11. The PEM process stops when a specified reset endpoint is reached.

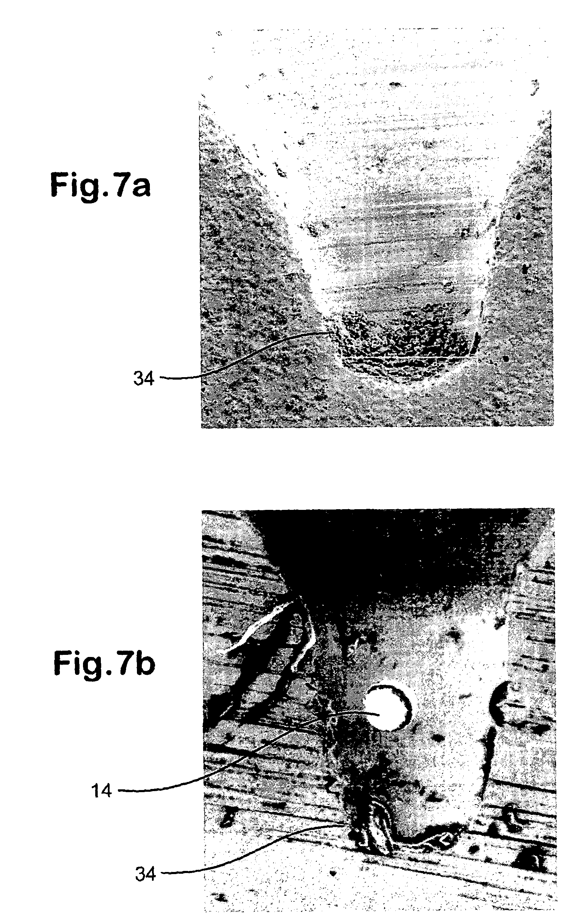

A scanning electron microscope view of a sac 34 which has been made according to the present invention is shown in Figure 7b. This sac 34 has a relatively smooth inner surface with a roughness average of less than 0.2 µm, and provides a 10% increase in the flow of fuel through the fuel outlet openings 14 compared with a conventionally machined sac. Additionally, the method of machining the sac 34 as described herein results in no electrode wear and high accuracy of the machined part. The apparatus 42 can be controlled to a machining depth of +/-13 µm.

The sac 34 shown in Figure 7b should be compared with the sac 34 shown in Figure 7a which has been manufactured using the conventional drilling technique, and in which it can be seen that by-products of the drilling process remain in the sac 34.

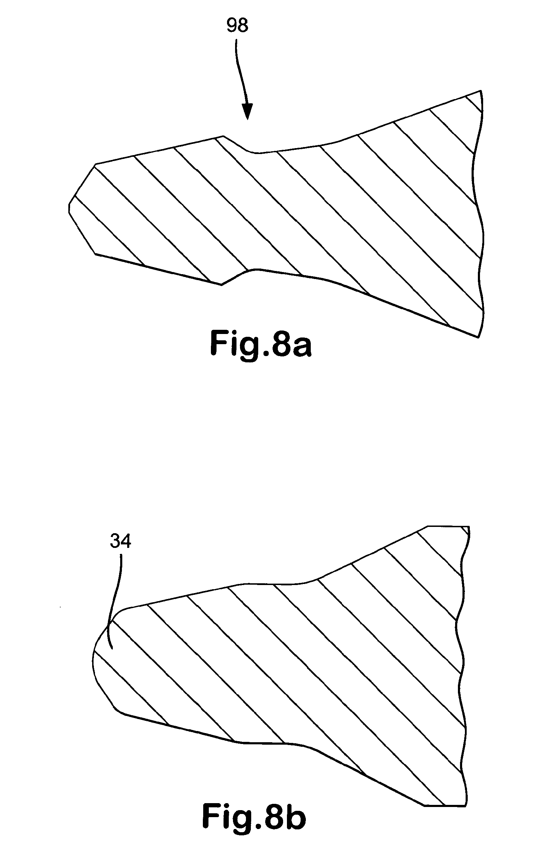

Figure 8a shows an electrode tip 98 which may be used in the aforedescribed apparatus 42, and Figure 8b is a view of the sac 34 produced with the electrode tip of Figure 8a. It should be noted that, due to the gap between the electrode tip 98 and the blind end of the bore 11, the profile of the electrode tip 98 shown in Figure 8a does not correspond exactly to the machined sac 34 shown in Figure 8b. However, the electrode tip 98 is shaped and dimensioned so as to give the best approximation to the desired sac profile.

Having described particular preferred embodiments of the present invention, it is to be appreciated that the embodiments in question are exemplary only, and that variations and modifications such as will occur to those possessed of the appropriate knowledge and skill may be made without departure from the scope of the invention as set out in the appended claims. For example, the present invention is applicable to a sac-type injection nozzle in which there is a sac communicating directly with inlet ends of the outlet openings, and also to a valve covered orifice (VCO) type nozzle provided with a sac. The present invention may also be utilised in a nozzle body which has a pre-formed seat and a partially pre-formed sac (e.g. by drilling). Alternatively, a nozzle body which does not have a partially pre-formed sac may be used, in which case the PEM process will take slightly longer.

The outlet openings 14 may also be pre-formed in the nozzle body 10 before the PEM process takes place. Alternatively, the outlet openings 14 may be formed after the sac 34 has been machined. The electrode tip 98 may be shaped and dimensioned so as to allow a many different sac geometries with varying combinations of conical and cylindrical regions, as well as different sizes of sac 34. Interchanging of the tip 98, depending on the required sac geometry, is a simple procedure.

The apparatus 42 may be modified to machine more than one sac 34 at a time. For example, the vibrating head 64 may be adapted to vibrate a plurality of electrodes 66 provided in a respective plurality of guides 70, with each electrode 66 associated with a sac of a different nozzle.

## Claims

1. An apparatus (42) for machining a sac (34) in an injection nozzle having an injection nozzle body (10) provided with a blind bore (11), the apparatus comprising: an electrode/guide assembly (66,70) comprising a vibratable electrode (66) having a shaped tip (98) and a guide (70) for the electrode, the guide (70) being shaped to define the flow of electrolyte to, and from, the electrode tip (98), vibrating means (64) for vibrating the electrode (66) and moving the electrode tip (98), in use, towards the blind end of the blind bore (11), and means for applying a pulsed current to the electrode (66) to effect a precision electrochemical machining process to machine the sac (34) in a substantially complementary shape to that of the electrode tip (98).

2. An apparatus (42) according to Claim 1, wherein the electrode (66) extends through a through bore (76) formed in the guide (70), and the electrode/guide assembly (66,70) is accommodated, in use, within the blind bore (11) formed in the injection nozzle body (10).

3. An apparatus (42) according to Claim 2, wherein the guide (70) engages, in use, with a seating (9) formed in the blind end of the bore (11).

4. An apparatus (42) according to Claim 2 or Claim 3, wherein the electrode tip (98) is spaced from the blind end of the bore (11) so as to form a gap through which electrolyte flows, in use.

5. An apparatus (42) according to any of Claims 2 to 4, wherein the guide (70) defines, with an internal surface of the blind bore (11), at least one first fluid passageway (81) for the flow of electrolyte, and the electrode (66) defines, with an internal surface of the through bore (76), at least one second fluid passageway (79) for the flow of electrolyte.

6. An apparatus (42) according to Claim 5, wherein the guide (70) comprises at least one longitudinal groove (77) formed in an outer surface thereof so as to define the at least one first fluid passageway (81).

7. An apparatus (42) according to Claim 5 or Claim 6, wherein the electrode (66) comprises an elongate member of substantially cylindrical cross-section having at least one substantially longitudinal flat (78) formed on its outer surface so as to define the at least one second fluid passageway (79).

8. An apparatus (42) according to Claim 7, wherein electrolyte is caused to flow, in use, to the electrode tip (98) via the at least one second fluid passageway (79), through the gap between the electrode tip (98) and the blind end of the bore (11), and away from the electrode tip (98) via the at least one first fluid passageway (81).

9. An apparatus (42) according to Claim 7, wherein the blind bore (11) and at least a portion of the guide (70) are substantially circular in cross-section, and the diameter, *D1*, of the guide (70) is approximately 200 µm less than the diameter, D2, of the blind bore (11) so as to facilitate the flow of electrolyte, in use, towards or away from the electrode tip.

10. An apparatus (42) according to any preceding claim, wherein the guide (70) comprises an electrically non-conductive material.

11. An apparatus (42) according to Claim 10, wherein the guide (70) comprises one of the group of: zirconium dioxide, a semi-crystalline thermoplastic, or enamel coated steel.

12. A method of machining a sac (34) in an injection nozzle having an injection nozzle body (10) provided with a blind bore (11) using the apparatus (42) claimed in any of Claims 1 to 11, the method comprising: applying a pulsed current to the electrode (66), vibrating the electrode (66) longitudinally within the guide (70) such that the size of the gap is periodically varied between a minimum length, *lmin*, and a maximum length, *lmax*, and periodically causing electrolyte to flow between the electrode tip (98) and the blind end of the bore (11) when the length of the gap is *lmin*, and moving the electrode tip (98) towards the blind end of the bore (11) during the machining of the sac (34).

13. A method according to Claim 12, wherein the electrode (66) is vibrated at a frequency of approximately 50 Hz.

14. A method according to Claim 12 or Claim 13, wherein the electrode (66) is vibrated with an amplitude of approximately 400 µm.

15. A method according to any of Claims 12 to 14, wherein the pulsed current is applied to the electrode (66) for between approximately 1 and 5 milliseconds when the size of the gap is *lmin*.

16. An injection nozzle (10) comprising a sac (34) machined using the apparatus (42) and/or method as claimed in any preceding claim.
